## Europäisches Patentamt

## European Patent Office

## Office européen des brevets

(19)

(11) Veröffentlichungsnummer: **0 173 106**
**A2**

(12)

# EUROPÄISCHE PATENTANMELDUNG

(21) Anmeldenummer: 85109664.4

(22) Anmeldetag: 01.08.85

(51) Int. Cl.⁴: **H 04 J 3/12**

(30) Priorität: **27.08.84 DE 3431423**

(43) Veröffentlichungstag der Anmeldung: **05.03.86**
**Patentblatt 86/10**

(84) Benannte Vertragsstaaten: **FR GB NL SE**

(71) Anmelder: **Telefonbau und Normalzeit GmbH, Mainzer Landstrasse 128-146 Postfach 4432, D-6000 Frankfurt (Main) (DE)**

(72) Erfinder: **Artun, Berkan, Dipl.-Ing., Landwehrstrasse 6, D-6100 Darmstadt (DE)**
Erfinder: **Goy, Helmut, Dipl.-Ing., Am Lindenbaum 13, D-6969 Nidderau 1 (DE)**

(54) Verfahren zur Übertragung von digitalen Informationen auf Anschlussleitungen von Fernmelde-, insbesondere Fernsprechvermittlungsanlagen.

(57) Durch dieses Verfahren wird vorgeschlagen, daß beim Einsatz von Verwürflern bei der Informationsübertragung ein Teil der Information von der Verwürfelung ausgenommen wird. Zu diesem Zweck ist an der Sendestelle ein besonderer Eingabespeicher vorgesehen, dem dieser Teil der Information seriell unverwürfelt zugeführt wird und parallel zu einem Sendespeicher gelangt. In der Empfangsstelle ist ebenfalls ein besonderer Ausgabespeicher vorgesehen, der die unverwürfelten Daten parallel empfängt und direkt seriell weitergibt. Bei diesen unverwürfelten Daten lassen sich zusätzliche Signale leicht hinzufügen, die an der Empfangsstelle direkt auswertbar sind. Die unverwürfelten Daten werden zusammen mit dem verwürfelten Anteil der Information von der Sendestelle zur Empfangsstelle seriell übertragen.

ACTORUM AG

Telefonbau und Normalzeit GmbH, 6000 Frankfurt am Main,
    Mainzer Landstrasse 128 - 146

Verfahren zur Übertragung von digitalen Informationen
auf Anschlußleitungen von Fernmelde-, insbesondere
Fernsprechvermittlungsanlagen

Die Erfindung betrifft ein Verfahren zur Übertragung von
digitalen Informationen auf Anschlußleitungen von Fernmelde-,
insbesondere Fernsprechvermittlungsanlagen, wobei Nutz-
und Signalisierungsdaten durch Verwendung eines AMI-Codes
gleichstromfrei übertragen werden und zur Verteilung der
Frequenzen über die zur Verfügung stehende Bandbreite
eine Verwürfelung der zu übertragenden Information vorgenommen wird.

In der "ntz, Band 33 ( 1980), Heft 10" ist ab Seite 646
ein Aufsatz abgedruckt mit dem Titel " Der Übergang zum
digitalen Ortsnetz". Dort ist auf Seite 649 dargestellt
und beschrieben, wie die auf Anschlußleitungen zu übertragende Information codiert sein kann und welche Polarität
den Einzelsignalen zugeordnet wird. Um die Übertragung von
codierten Informationen auf Anschlußleitungen gleichstromfrei
durchzuführen, werden ternäre Codes angewendet. Ein Beispiel
dafür ist der sogenannte AMI-Code, wobei die binäre Null
grundsätzlich als Null-Signal übertragen wird und bei der
binären Eins abwechselnd entweder ein positiver oder ein
negativer Impuls gesendet wird. Bei der Anwendung dieses
Codes kann sich eine Übertragungsleitung nicht auf einen
bestimmten Gleichstromwert aufladen.

Bei der Übertragung von digitalen Informationen über Zweidrahtleitungen müssen die beiden Informationsrichtungen (Senden/Empfangen) voneinander getrennt werden. Dies kann, wie es in dem besagten Aufsatz beschrieben ist, auf verschiedene Art und Weise geschehen. Oft angewendet wird dabei das Zeitgetrenntlage -Verfahren, wie es auf Seite 650 angegeben ist. Dabei werden die jeweils zu übertragenden Informationen schubweise als sogenannter Burst gesendet und empfangen, wie dies in den Bildern 5 und 7 dargestellt ist. Es ergeben sich bei einer derartigen Übertragung sogenannte Leistungsdichtespektren auf der Anschlußleitung, die aufgetragen über die Frequenz f in etwa einer Gauß'schen Verteilung entsprechen.

Um zu vermeiden, daß bei symmetrisch aufgebauten Informationen, d.h. bei symmetrischer Anordnung der Informationen Null und Eins, sich eine Frequenz besonders stark ausbildet, ist es bekannt, die digitalen Informationen an der Sendestelle zu verwürfeln. Mit dem Verwürfeln wird erreicht, daß die einzelnen Frequenzen zufallsverteilt so auftreten, daß die ideale Verteilungskurve über das Leistungsdichtespektrum erreicht wird. Damit wird das beim starken Auftreten von Einzelfrequenzen sich häufig ergebende Nebensprechen weitgehend vermieden. Wie solche Verwürfler aufgebaut sein können, ist in einem Aufsatz beschrieben, der in "The Bell Technical Journal" , Feb. 1967 ab Seite 449 abgedruckt ist. Selbstverständlich müssen die auf der Sendeseite verwürfelten Daten auf der Empfangsseite wieder in gleicher Weise zurückgewonnen werden, wie sie vor der Verwürfelung waren, so daß eine ordnungsgemäße Auswertung möglich ist. Auf der Empfangsseite werden deshalb Einrichtungen eingesetzt, die man als Entwürfler bezeichnen könnte und in ähnlicher Weise aufgebaut sind, wie die auf der Sendeseite eingesetzten Verwürfler. Bei dieser Verfahrensweise ist bisher immer davon ausgegangen worden, daß der gesamte Informationinhalt einer zu sendenden Nachricht verwürfelt wird und auch auf der Empfangsseite in seiner Gesamtheit wieder gewonnen wird. Da in einer empfangenen Nachricht Informationen unterschiedlicher Art enthalten sein können, beispielsweise Nutz- und Signalisierungsdaten, die jeweils unterschiedlich auszuwerten sind, können diese Daten erst dann voneinander getrennt werden, wenn die gesamte verwürfelte Nachricht
wieder in ihrem Ursprungszustand zurückversetzt worden ist.
Bei den Nutzdaten kann es sich beispielsweise um digitalisierte
Sprachproben handeln, wie sie beim digitalen Fernsprechen
als sogenannte PCM-Worte übertragen werden. Die Signalisierungsdaten enthalten beispielsweise Angaben über den Verbindungszustand oder über durchzuführende Schaltmaßnahmen.

Die Aufgabe der Erfindung besteht darin, ein Verfahren anzugeben, womit es möglich ist, vorbestimmte Teile einer
Gesamtinformation, beispielsweise die Signalisierungsdaten,
an der Empfangsstelle auf besonders einfache Weise wieder
zu gewinnen. Diese Aufgabe wird durch eine Merkmalskombination
gelöst, wie sie im Patentanspruch 1 angegeben ist. Weiterbildungen der Erfindung ergeben sich aus dem Unteranspruch.

Damit wird in vorteilhafter Weise erreicht, daß beim
Empfangen von digitalen Informationen Teile davon schon
ausgewertet werden können, bevor eine "Entwürfelung"
stattgefunden hat. Bei der Anwendung dieses Verfahrens
ist kaum mit erhöhten Aufwand zu rechnen. Außerdem ergibt
sich der Vorteil, daß auf der Sendeseite besondere
Signalisierungsdaten, beispielsweis für die Inbetriebnahme
einer Einrichtung oder für den Aufbau einer Verbindung,
besonders leicht eingefügt werden können. Weil es sich bei
dieser Art der unverwürfelten Übertragung von Daten nur
um einen geringen Teil der Gesamtinformation handelt, wird
die Gesamtwirkung der Verwürfelung an sich nur unwesentlich
beeinflußt.

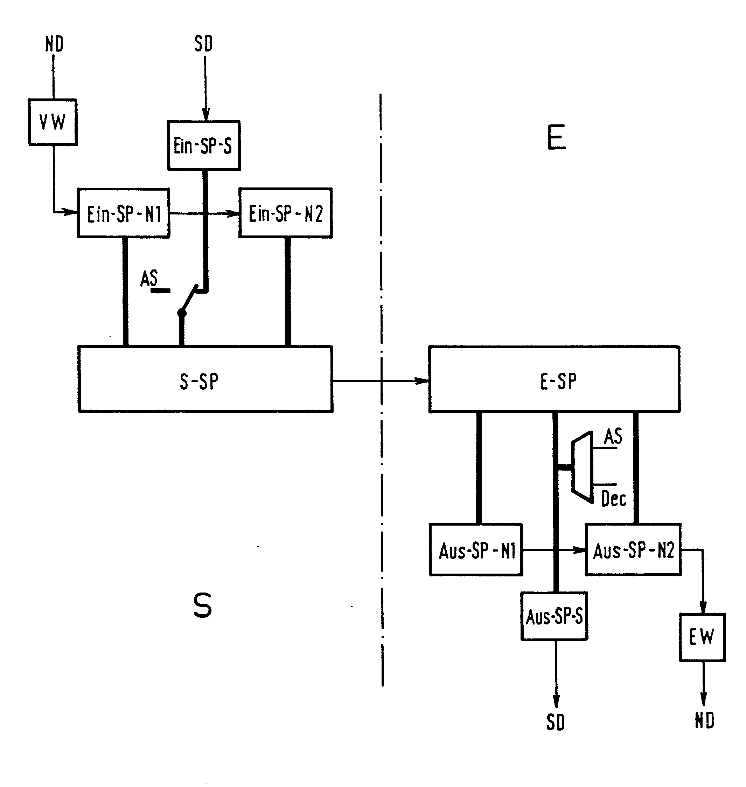

Ein Ausführungsbeispiel der Erfindung wird nachfolgend
anhand einer Zeichnung näher beschrieben. In der Zeichnung ist
angedeutet, daß Nutzdaten ND und Signalisierungsdaten bei
der Sendestelle getrennt einem Sendespeicher S-SP zugeführt
werden. Der wesentlich größere aus Nutzdaten ND bestehende
Teil der Information wird vorher einem Verwürfler VW zugeführt. Die verwürfelten Daten gelangen seriell in Eingabespeicher Ein-SP-N1 und Ein-SP-N2, von wo aus sie parallel
dem Sendespeicher S-SP angeboten werden. Der kleinere Teil
der Gesamtinformation, beispielsweise die Signalisierungsdaten SD werden ebenfalls in einem Speicher Ein-SP-S seriell eingegeben, ohne vorher verwürfelt zu werden. Diese Signalisierungsdaten SD gelangen zusammen mit den verwürfelten Nutzdaten ND parallel zum Sendespeicher S-SP. Der Sendespeicher S-SP wirkt in bekannter Weise als Seriell/Parallel-Wandler, so daß die gesamte Information seriell abgesendet wird.

An der Empfangsstelle gelangen die seriell einlaufenden Informationen in einen Empfangsspeicher E-SP, der eine Seriell/Parallel-Wandlung vornimmt. Da bekannt ist, an welcher Stelle der Gesamtinformation sich die unverwürfelten Signalisierungsdaten SD befinden, werden diese parallel einem besonderen Ausgabespeicher Aus-SP-S zugeführt. Dieser Ausgabespeicher Aus-SP-S kann als Parallel/Seriell-Wandler ausgebildet sein, so daß die Signalisierungsdaten SD seriell weitergegeben werden. Zusätzlich ergibt sich der Vorteil, daß diese Signalisierungsdaten SD direkt parallel ausgewertet werden können, wenn wie in der Zeichnung dargestellt, eine Decodiereinrichtung Dec an die Parallel-Ausgänge des Empfangsspeichers E-SP angeschlossen ist. Da die übrige Information, also die Nutzdaten ND verwürfelt sind, werden sie vom Empfangsspeicher aus E-SP aus zunächst parallel in zugehörigen Speichern Aus-SP-N1 und N2 zwischengepeichert,um dort parallel/seriell-gewandelt einem Entwürfler EW zugeführt zu werden. Von dort aus werden sie in ihrer Originalform zur weiteren Verarbeitung abgegeben.

Neben den üblichen Signalisierungsdaten SD können an der Sendestelle S besondere Signale, beispielsweise Aufbausignale AS dem Sendespeicher S-SP angeboten werden, wie dies symbolisch durch einen Umschaltkontakt dargestellt ist. Je nach der für die unverwürfelten Daten zur Verfügung stehenden Kapazität (Anzahl der Bits) können auch mehrere unterschiedliche Signale dieser Art auf direktem Wege übertragen werden. Durch eine an der Empfangsstelle E hinter dem Empfangsspeicher E-SP angeschlossene Decodiereinrichtung Dec werden derartige Signale, im Beispiel ein Aufbausignal AS direkt ausgewertet.

P 3909
Gö/we
10.8.84

0173106

Telefonbau und Normalzeit GmbH, 6000 Frankfurt am Main,
Mainzer Landstrasse 128 - 146

Verfahren zur Übertragung von digitalen Informationen
auf Anschlußleitungen von Fernmelde-, insbesondere
Fernsprechvermittlungsanlagen

Patentansprüche

1. Verfahren zur Übertragung von digitalen Informationen
auf Anschlußleitungen von Fernmelde-, insbesondere
Fernsprechvermittlungsanlagen, wobei Nutz- und
Signalisierungsdaten durch Verwendung eines AMI-Codes
gleichstromfrei übertragen werden und zur Verteilung
der Frequenzen über die zur Verfügung stehenden Bandbreite eine Verwürfelung der zu übertragenden Information vorgenommen wird,
dadurch gekennzeichnet,
daß für einen Teil der Information, vorzugsweise die
Signalisierungdaten (SD), an der Sendestelle (S) ein
besonderer Eingabespeicher (Ein-SP-S) vorgesehen ist,
in den die Daten (SD) unverwürfelt eingegeben werden,
die dann parallel zusammen mit den übrigen verwürfelten
Daten (ND) in einen als Parallel/Seriell-Wandler
fungierenden Sendespeicher (S-SP) gelangen, und daß
an der Empfangsstelle (E) ein separater Ausgabespeicher
(Aus-SP-S) für die nicht verwürftelten Daten (SD) vorgesehen ist, der diese parallel von einem Empfangsspeicher
(E-SP) empfängt und seriell  getrennt von den übrigen
Daten (ND) weitergibt.

2. Verfahren nach Anspruch 1,
dadurch gekennzeichnet,
daß an der Sendestelle (S) besondere Signale, beispielsweise Verbindungsaufbausignale (AS) parallel anstelle des Inhaltes des besonderen Eingabespeichers (Ein-SP-S) in den Sendespeicher (S-SP) eingebbar sind, die an der Empfangsstelle (E) von einer mit dem separaten Ausgabespeicher (Aus-SP-S) parallel an dem Empfangsspeicher (E-SP) angeschlossenen Decodiereinrichtung (Dec) erkannt werden.

P 3909
Gö/we
10.8.84